Europäisches Patentamt

European Patent Office

Office européen des brevets

(11) Veröffentlichungsnummer: **0 028 294**
**B1**

(12) **EUROPÄISCHE PATENTSCHRIFT**

(45) Veröffentlichungstag der Patentschrift :
26.10.83

(21) Anmeldenummer : 80104809.1

(22) Anmeldetag : 14.08.80

(51) Int. Cl.³ : **G 02 F 1/133// G02B1/10**

(54) Passives elektrooptisches Anzeigeelement.

(30) Priorität : 02.11.79 DE 2944325.

(43) Veröffentlichungstag der Anmeldung :
13.05.81 Patentblatt 81/19

(45) Bekanntmachung des Hinweises auf die Patenterteilung : 26.10.83 Patentblatt 83/43

(84) Benannte Vertragsstaaten :
CH DE FR GB LI NL

(56) Entgegenhaltungen :
DE A 2 544 940
GB A 2 010 529

PATENTS ABSTRACTS OF JAPAN, Band 1, Nr.
72, 13. Juli 1977, Seite 782E77 Tokyo, JP

PATENTS ABSTRACTS OF JAPAN, Band 1, Nr.
132, 31. Oktober 1977, Seite 6019E77 Tokyo, JP

PATENTS ABSTRACTS OF JAPAN, Band 4, Nr.
10, 25. Januar 1980, Seite 153E167 Tokyo, JP

(73) Patentinhaber : VDO Adolf Schindling AG
Gräfstrasse 103
D-6000 Frankfurt/Main (DE)

(72) Erfinder : Baeger, Holm, Dr.
Salzbornstrasse 1
D-6231 Schwalbach (DE)
Erfinder : Wedel, Hans, Dr.
Im Wiesengrund 20
D-6109 Mühltal 4 (DE)

(74) Vertreter : Könekamp, Herbert, Dipl.-Ing.
Sodener Strasse 9
D-6231 Schwalbach (DE)

Passives elektrooptisches Anzeigeelement

Die Erfindung bezieht sich auf ein passives elektrooptisches Anzeigeelement zur Darstellung von Informationen, insbesondere von alphanumerischen Zeichen, mit zwei im Abstand zueinander angeordneten, durchsichtigen Elektrodenträgern, die zwischen sich eine Flüssigkristallsubstanz einschließen und an ihren dieser abgewandten Flächen jeweils mit einem Polarisator versehen sind, von denen der auf dem vorderen Elektrodenträger sitzende Polarisator auf seiner dem Betrachter zugewandten Oberfläche mit einer dünnen glasklar aushärtenden Schicht überzogen ist.

Übliche elektrooptische Anzeigeelemente haben den Nachteil, daß der auf den vorderen Elektrodenträgern aufgeklebte Polarisator, der im allgemeinen als Polarisationsfolie ausgebildet ist, zu so erheblichen Spiegelungen führen kann, daß eine genaue Ablesung des Anzeigeelements nicht mehr möglich ist. Solange derartige Anzeigeelemente gegenüber dem Betrachter beweglich sind, was z. B. bei in Armbanduhren eingebauten Anzeigeelementen der Fall ist, lassen sich derartige Spiegelungen durch Bewegen des Anzeigeelements ohne Schwierigkeiten vermeiden. Dies ist jedoch dann nicht mehr möglich, wenn das Anzeigeelement gegenüber dem Betrachter nicht mehr bewegt werden kann, was insbesondere dann der Fall ist, wenn das Anzeigeelement direkt oder indirekt in einem Kraftfahrzeug eingebaut ist oder sich in einem ortsfesten Gehäuse befindet, was bei Großuhren der Fall sein kann.

Vorstehendes trifft in gleicher Weise auch auf ein bekanntes Anzeigeelement der eingangs genannten Gattung zu (JP-A-52 9458), bei dem auf der dem Betrachter zugewandten Seite des Polarisators zur Erzielung einer erhöhten Feuchtigkeitsbeständigkeit und Lebensdauer eine dünne, glasklar aushärtende Schicht angeordnet ist. Die Schicht, die aus einem Polymerisationskunststoff, wie Polytetrafluoräthylen oder Polyäthylen und darin fein verteilten transparenten Keramikteilchen besteht, wird durch gleichzeitiges Aufdampfen des Kunststoffs und des Keramikmaterials erzeugt, so daß sie glatt und glänzend ist und naturgemäß spiegelt.

Zur Vermeidung derartiger Spiegelungen ist bereits vorgeschlagen worden, den dem Betrachter zugewandten Polarisator des Anzeigeelements konvex gewölbt auszubilden. Hierdurch lassen sich zwar recht gute Ergebnisse erzielen, von Nachteil ist jedoch der durch die konvexe Wölbung sich ergebende höhere Platzbedarf eines solchen Anzeigeelements sowie die gegenüber einem nicht entspiegelten Anzeigeelement höheren Produktkosten.

Diese Nachteile sollen durch die Erfindung überwunden werden. Es ist daher Aufgabe der Erfindung, ein passives elektrooptisches Anzeigeelement der eingangs beschriebenen Gattung so zu verbessern, daß Spiegelungen durch den Polarisator oder durch auf diesen aufgebrachten Schichten vermieden oder zumindest auf ein nicht mehr störendes Maß zurückgeführt werden.

Ausgehend von einem Anzeigeelement der eingangs beschriebenen Gattung wird diese Aufgabe erfindungsgemäß dadurch gelöst, daß die Schicht aus einem Lack besteht, in dem zwischen zwei und zehn Gewichtsprozent des gebrauchsfertigen Lacks Füllstoffe suspendiert sind, dergestalt, daß nach dem Aushärten des Lacks Spiegelungen verhindernde Unebenheiten in der Lackoberfläche vorhanden sind.

Die Unebenheiten in der Lackoberfläche führen dazu, daß das auf die Oberfläche auftreffende Licht nicht mehr gebündelt reflektiert wird sondern eine Streuung des reflektierten Lichts stattfindet, wodurch die Ablesung des Anzeigeelements beeinträchtigende Spiegelungen nicht mehr auftreten können. Da die Lackschicht verhältnismäßig dünn sein kann, wird das Bauvolumen des Anzeigeelements durch diese Maßnahme praktisch nicht vergrößert. Ein besonderer Vorteil der Erfindung besteht darin, daß bei geeigneter Auswahl des glasklar aushärtenden Lacks die Lackschicht gleichzeitig als mechanischer Schutz des Polisators dienen kann. Dieser ist nämlich aufgrund seiner Weichheit sehr kratzempfindlich, so daß häufig besondere Maßnahmen zu seinem mechanischen Schutz ergriffen werden müssen. Dies ist nach Aufbringen der Lackschicht nicht länger erforderlich.

In einer besonders vorteilhaften Ausführungsform der Erfindung erstreckt sich die aufzubringende Schicht über die Polarisatorfläche hinaus und liegt der Schichtrand auf dem Elektrodenträger auf. Es hat sich gezeigt, daß der Schichtrand sich hierbei so innig mit dem Elektrodenträger verbindet, daß der Polarisator auch gegen klimatische Einflüsse in erhöhtem Maß geschützt ist. Die klimatischen Einflüsse führen bei den bekannten Polarisatoren nämlich dazu, daß die Polarisatoren von den Kanten her ausbleichen und sie dadurch ihre Polarisationswirkung verlieren. Zudem kann es geschehen, daß sich die Polarisatoren stellenweise von ihrem Elektrodenträger lösen, so daß sich ungleiche Polarisationswirkungen ergeben, was sich in einer fleckigen Anzeige auswirkt. Durch den Überzug des Polarisators mit dem Lack können alle diese auf Klimaeinflüssen beruhenden Nachteile der Polarisatoren erheblich vermindert und bei nicht zu großen auf das Anzeigeelement wirkenden Klimaschwankungen gar ganz unterbunden werden.

Es ist ohne weiteres einzusehen, daß mit steigendem Anteil der in Rede stehenden Füllstoffe im Lack die Durchsichtigkeit desselben wie auch die Fähigkeit zu spiegeln abnimmt, während mit geringer werdendem Anteil der Füllstoffe die Durchsichtigkeit der Lackschicht verbessert, gleichzeitig aber auch ihre Fähigkeit zu spiegeln erhöht wird. Für eine breite Palette von Anwendungsbereichen hat es sich daher als zweckmäßig erwiesen, einen Anteil zwischen vier und sechs Gewichtsprozent Füllstoffe im Lack zu suspendieren.

Als Füllstoff kann an und für sich jeder organische oder anorganische Füllstoff verwendet werden. Als besonders vorteilhaft hat sich jedoch Siliciumdioxid als Füllstoff erwiesen, da sich bei diesem eine besonders geringe Beeinträchtigung der Durchsichtigkeit des Lacks ergibt. Die Partikelgröße des Füllstoffes sollte im Mikrometer-Bereich liegen.

Gemäß einer Ausführungsform der Erfindung ist als Lack ein Alkydharzlack vorgesehen. Dieser eignet sich hinsichtlich seiner mechanischen und klimatischen Eigenschaften besonders gut für den vorliegenden Zweck. Vorteilhafter ist die Verwendung eines Polyurethanlacks, der sehr günstige Eigenschaften hinsichtlich Kratzfestigkeit sowie Temperatur- und Feuchtigkeitsverhalten hat.

Da auch die Trocknungszeit des Lacks einen gewissen Einfluß auf die Güte der Transparenz und die Entspiegelungswirkung der Lackschicht hat, empfiehlt es sich, einen Zwei-Komponenten-Lack zu verwenden, da bei diesem durch Variation der Härtermenge die gewünschte Aushärtezeit ohne besondere Schwierigkeiten eingestellt werden kann.

Die Erfindung sei anhand der Zeichnung, die in zum Teil schematischer Darstellung ein Ausführungsbeispiel enthält, näher erläutert. Es zeigen

Figur 1 einen Längsschnitt durch ein passives elektrooptisches Anzeigeelement und

Figur 2 eine Aufsicht auf das Anzeigeelement gemäß Figur 1.

Das Anzeigeelement besteht aus zwei durchsichtigen Elektrodenträgern 1 und 2, auf deren einander zugewandten Seiten die Elektroden 3 und 4 aufgebracht sind. Die beiden Elektrodenträger 1 und 2 sind über einen Rahmen 5 miteinander verbunden. Der durch die Elektrodenträger 1 und 2 und den Rahmen 5 gebildete Raum ist mit einer Flüssigkristallsubstanz 6 gefüllt. Auf den beiden den Elektroden 3 und 4 abgewandten Seiten der Elektrodenträger 1 und 2 ist jeweils ein Polarisator 7 bzw. 8 aus Polyvinylazetat aufgeklebt.

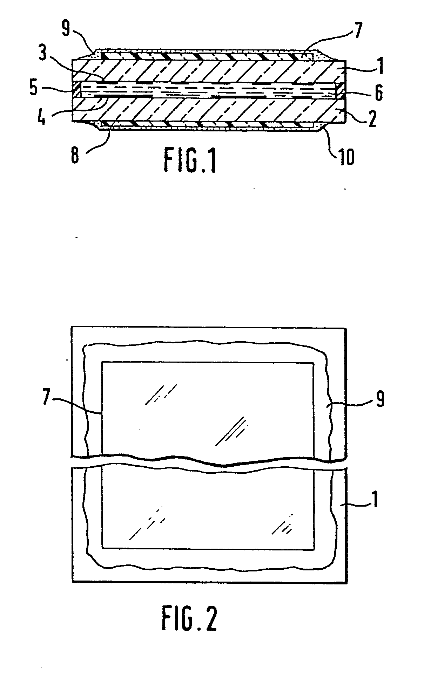

Der dem Betrachter zugewandte Polarisator 7 ist mit einer dünnen Schicht 9 aus einem glasklar aushärtenden Lack mit einem darin suspendierten Füllstoff in einer Menge von vier Gewichtsprozent überzogen. Wie aus Figur 2 ersichtlich, erstreckt sich diese Schicht 9 über die Fläche des Polarisators 7 hinaus auf den Elektrodenträger 1, wodurch der Polarisator 7 allseitig von ihn schützenden Elementen umgeben ist.

In vorliegendem Fall ist darüber hinaus auch noch der Polarisator 8 auf der Rückseite des Anzeigeelements mit einer Lackschicht 10 gleichen Lackmaterials überzogen. Diese Lackschicht braucht jedoch keine Füllstoffe zu enthalten, wiewohl es aus fertigungstechnischen Gründen einfacher sein kann, auch für die Lackschicht 10 das gleiche mit Füllstoffen versehene Material zu verwenden wie für die Lackschicht 9.

## Ansprüche

1. Passives elektrooptisches Anzeigeelement zur Darstellung von Informationen, insbesondere von alphanumerischen Zeichen mit zwei im Abstand zueinander angeordneten, durchsichtigen Elektrodenträgern, die zwischen sich eine Flüssigkristallsubstanz einschließen und an ihrer dieser abgewandten Fläche mit einem Polarisator versehen sind, von denen der auf dem vorderen Elektrodenträger sitzende Polarisator auf seiner dem Betrachter zugewandten Oberfläche mit einer dünnen, glasklar aushärtenden Schicht überzogen ist, dadurch gekennzeichnet, daß die Schicht (9) aus einem Lack besteht, in dem zwischen zwei und zehn Gewichtsprozent des gebrauchsfertigen Lacks Füllstoffe suspendiert sind, dergestalt, daß nach dem Aushärten des Lacks Spiegelungen verhindernde Unebenheiten in der Lackoberfläche vorhanden sind.

2. Anzeigeelement nach Anspruch 1, dadurch gekennzeichnet, daß sich die Schicht (9) über die Polarisatorfläche hinaus ausdehnt und der Schichtrand auf dem Elektrodenträger (1) aufliegt.

3. Anzeigeelement nach Anspruch 1 oder 2, dadurch gekennzeichnet, daß ein Anteil zwischen vier und sechs Gewichtsprozent Füllstofte in dem Lack suspendiert sind.

4. Anzeigeelement nach einem der Ansprüche 1 bis 3, dadurch gekennzeichnet, daß als Füllstoff Siliciumdioxid vorgesehen ist.

5. Anzeigeelement nach einem der Ansprüche 1 bis 4, dadurch gekennzeichnet, daß als Lack ein Polyurethanlack vorgesehen ist.

6. Anzeigeelement nach einem der Ansprüche 1 bis 5, dadurch gekennzeichnet, daß ein Zwei-Komponenten-Lack vorgesehen ist.

## Claims

1. Passive electrooptical indicating element for the representing of data, more particularly of alphanumeric characters, with two spaced-apart transparent electrode supports which enclose between themselves a liquid crystal substance and are procided at their surface remote from the latter with a polariser, whereof the polariser arranged on the forward electrode support is covered at its surface facing towards the viewer with a thin coating which hardens out to a transparent state, characterised in that the coating (9) consists of a varnish in which fillers are in suspension to the amount of between two and ten percent by weight of ready-for-use varnish, in such a manner that, after the varnish has hardened, unevennesses are present in the varnish surface which prevent reflections.

2. Indicating element according to claim 1, characterised in that the coating (9) extends beyond the polariser face and the edge of the coating rests on the electrode support (1).

3. Indicating element according to claim 1 or 2, characterised in that the amount of fillers in suspension in the varnish is between four and six percent by weight.

4. Indicating element according to one of claims 1 to 3, characterised in that silicon dioxide is provided as filler.

5. Indicating element according to one of claims 1 to 4, characterised in that a polyurethane varnish is provided as the varnish.

6. Indicating element according to one of claims 1 to 5, characterised in that a two-component varnish is provided.

**Revendications**

1. Elément passif d'affichage électro-optique en vue de la représentation d'informations, en particulier de signes alphanumériques, comportant deux supports transparents d'électrodes qui, disposés à distance l'un de l'autre, renferment entre eux une substance à cristaux liquides et présentent un polariseur respectif sur leurs faces éloignées de ladite substance, le polariseur placé sur le support d'électrode antérieur étant revêtu, sur sa face supérieure tournée vers l'observateur, d'une mince couche transparente durcissable, élément caractérisé par le fait que la couche (9) consiste en un vernis, qui renferme en suspension des matières de remplissage représentant entre deux et dix pour cent en poids du vernis prêt à être utilisé, de telle sorte que, après le durcissement du vernis, la face supérieure de ce dernier présente des irrégularités évitant des reflets.

2. Elément d'affichage selon la revendication 1, caractérisé par le fait que la couche (9) s'étend au-delà de la surface du polariseur et le bord de cette couche repose sur le support (1) d'électrode.

3. Elément d'affichage selon la revendication 1 ou 2, caractérisé par le fait que le vernis renferme en suspension une proportion de matières de remplissage comprise entre quatre et six pour cent en poids.

4. Elément d'affichage selon l'une des revendications 1 à 3, caractérisé par le fait qu'il est prévu du dioxyde de silicium en guise de matière de remplissage.

5. Elément d'affichage selon l'une des revendications 1 à 4, caractérisé par le fait qu'il est prévu en guise de vernis un vernis de polyuréthane.

6. Elément d'affichage selon l'une des revendications 1 à 5, caractérisé par le fait qu'il est prévu un vernis à deux composants.

FIG.1

FIG.2